# EUROPEAN PATENT APPLICATION

(11) **EP 3 926 849 A1**
(43) Date of publication of application: **22.12.2021**
(21) Application number: 19915463.4
(22) Date of filing: 15.02.2019
(51) Int. Cl.: H04B 7/06, H04L 27/26

(54) **USER TERMINAL AND WIRELESS COMMUNICATION METHOD**

(71) Applicant: NTT DOCOMO, INC., Chiyoda-ku Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); HOU, Xiaolin, Beijing 100190 (CN)
(74) Representative: Hoffmann Eitle
(86) International application number: PCT/JP2019/005672
(87) International publication number: WO 2020/166079

(57) **Abstract**

In order to appropriately perform a BFR procedure, an aspect of a user terminal of the present disclosure includes: a control section that determines a new candidate beam or a given DL reference signal based on at least one of a DL reference signal transmitted in a given cell and a DL reference signal transmitted in another cell configured in the same given frequency range as the given cell when a beam failure in the given cell is detected; and a transmission section that transmits information related to the new candidate beam or the given DL reference signal.

## Description

### Technical Field

The present disclosure relates to a user terminal and a radio communication method in a next-generation mobile communication system.

### Background Art

In a universal mobile telecommunications system (UMTS) network, specifications of long term evolution (LTE) have been drafted for the purpose of further increasing a data rate, providing low latency, and the like (see Non Patent Literature 1). Further, the specifications of LTE-Advanced (third generation partnership project (3GPP) Release. (Rel.) 10 to 14) have been drafted for the purpose of further increasing capacity and advancement of LTE (3GPP Rel. 8 and 9).

Successor systems to LTE (e.g., also referred to as 5th generation mobile communication system (5G), 5G+ (plus), new radio (NR), or 3GPP Rel. 15 or later) are also being studied.

In the existing LTE system (for example, LTE Rel. 8 to 13), a user terminal (user equipment (UE)) controls reception of a downlink shared channel (for example, physical downlink shared channel (PDSCH)) based on downlink control information (DCI, also referred to as DL assignment or the like) from a radio base station. Further, the UE controls transmission of a physical uplink shared channel (e.g., a physical uplink shared channel (PUSCH)) based on DCI (also referred to as UL grant or the like).

Further, in the existing LTE system (e.g., Rel. 8 to 14), monitoring of radio link quality (radio link monitoring: RLM) is performed. When a radio link failure (RLF) is detected by RLM, re-establishment of radio resource control (RRC) connection is requested of the user terminal (user equipment: UE).

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In future radio communication systems (e.g., New Radio), it is studied to perform a procedure to detect a beam failure (BF) and switch to another beam (which may also be referred to as "beam failure recovery (BFR) procedure", "BFR", and so on). Further, in the BFR procedure, when a beam failure occurs, the UE reports a beam failure recovery request (BFRQ) to request the recovery of the beam failure, and reports information about a new candidate beam.

It is studied to determine the new candidate beam based on a DL reference signal transmitted from a base station. However, how to determine the new candidate beam in the BFR procedure in the case of using a plurality of cells has not been sufficiently studied. If the BFR procedure is not appropriately performed, there is a possibility of causing a decrease in performance of a system such as a delay of the BFR.

Therefore, an object of the present disclosure is to provide a user terminal and a radio communication method for appropriately performing a BFR procedure.

### Solution to Problem

A user terminal according to one aspect of the present disclosure includes: a control section that determines a new candidate beam or a given DL reference signal based on at least one of a DL reference signal transmitted in a given cell and a DL reference signal transmitted in another cell configured in the same given frequency range as the given cell when a beam failure in the given cell is detected; and a transmission section that transmits information related to the new candidate beam or the given DL reference signal.

### Advantageous Effects of Invention

According to one aspect of the present disclosure, the BFR procedure can be appropriately performed.

### Brief Description of Drawings

Fig. 1 is a diagram illustrating an example of a BFR procedure in Rel. 15 New Radio.
Fig. 2 is a diagram for describing intra-band CA and inter-band CA.
Fig. 3 is a diagram illustrating an example of a configuration of a new candidate beam RS.
Fig. 4 is a diagram illustrating another example of the configuration of the new candidate beam RS.
Fig. 5 is a diagram illustrating still another example of the configuration of the new candidate beam RS.
Fig. 6 is a diagram illustrating yet still another example of the configuration of the new candidate beam RS.
Fig. 7 is a diagram illustrating an example of a schematic configuration of a radio communication system according to one embodiment.
Fig. 8 is a diagram illustrating an example of a configuration of a base station according to one embodiment.
Fig. 9 is a diagram illustrating an example of a configuration of a user terminal according to one embodiment.
Fig. 10 is a diagram illustrating an example of a hardware configuration of the base station and the user terminal according to one embodiment.

### Description of Embodiments

### <Beam Failure Recovery>

In New Radio, communication using beam forming has been studied. For example, UEs and base stations (e.g., gNodeBs (gNBs)) may use beams used for signal transmission (also referred to as transmission beams, Tx beams, or the like) and beams used for signal reception (also referred to as reception beams, Rx beams, or the like).

When beam forming is used, deterioration of radio link quality is expected because it becomes susceptible to interference by obstacles. The deterioration of radio link quality can cause frequent radio link failures (RLFs). When the RLF occurs, cell re-connection is required. Thus, the frequent occurrence of RLFs leads to deterioration of system throughput.

In New Radio, to reduce the occurrence of RLFs, it is being studied that when the quality of a specific beam is deteriorated, a procedure to switch to another beam is performed (which may be referred to as beam recovery (BR), beam failure recovery (BFR), Layer 1/Layer 2 (L1/L2) beam recovery, or the like). Note that the BFR procedure may also be simply referred to as BFR.

Note that a beam failure (BF) in the present disclosure may be referred to as a radio link failure (RLF) .

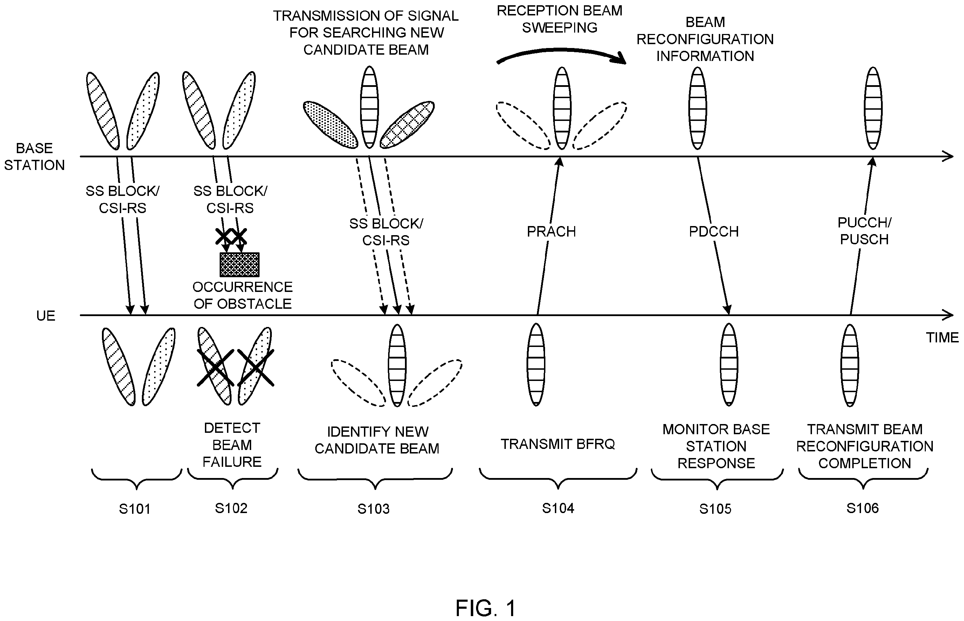

Fig. 1 is a diagram illustrating an example of a beam recovery procedure in Rel. 15 New Radio. The number of beams, or the like, is an example, and is not limited thereto. In an initial state (step S101) in Fig. 1, the UE performs measurement based on a reference signal (RS) resource transmitted using two beams.

The RS may be at least one of a synchronization signal block (SSB) and a channel state information RS (CSI-RS). Note that an SSB may also be referred to as an SS/Physical Broadcast Channel (PBCH) block, or the like.

The RS may be at least one of a primary synchronization signal (primary SS (PSS)), a secondary synchronization signal (secondary SS (SSS)), a mobility reference signal (mobility RS (MRS)), a signal included in an SSB, the SSB, a CSI-RS, a demodulation reference signal (DMRS), a beam-specific signal, and the like, or a signal configured by extending or changing these. The RS measured in step S101 may be referred to as a beam failure detection RS (BFD-RS).

In step S102, radio waves from a base station are interrupted, so that UE cannot detect BFD-RS (or reception quality of RS deteriorates). Such interference may occur due to, for example, an effect of an obstacle between the UE and the base station, fading, interference, or the like.

The UE detects a beam failure when a given condition is satisfied. For example, the UE may detect occurrence of a beam failure in a case where a block error rate (BLER) is less than a threshold value for all of configured BFD-RS resource configurations (BFD-RSs). When the occurrence of the beam failure is detected, a lower layer (physical (PHY) layer) of the UE may report (indicate) a beam failure instance to a higher layer (MAC layer).

Note that criterion is not limited to the BLER, and may be reference signal received power in a physical layer (Layer 1 Reference Signal Received Power (L1-RSRP)). Further, instead of the RS measurement or in addition to the RS measurement, beam failure detection may be performed based on a downlink control channel (physical downlink control channel (PDCCH)) or the like. The BFD-RS may be expected to be in a quasi-co-location (QCL) with DMRS of PDCCH monitored by the UE.

Here, the QCL is an indicator indicating a statistical property of a channel. For example, a case where one signal/channel and another signal/channel have a QCL relation may mean that it is possible to assume that at least one of Doppler shift, Doppler spread, an average delay, a delay spread, and a spatial parameter (e.g., a spatial Rx parameter) is identical (in QCL with respect to at least one of these) between the plurality of different signals/channels.

Note that the spatial Rx parameter may correspond to a reception beam of the UE (e.g., a reception analog beam), and the beam may be identified based on spatial QCL. The QCL (or at least one element of the QCL) in the present disclosure may be replaced with the spatial QCL (sQCL).

Information related to BFD-RS (for example, an RS index, a resource, the number, the number of ports, precoding, or the like), information related to the beam failure detection (BFD) (for example, the above-described threshold value), or the like may be configured to (provided in notification to) the UE by using higher layer signaling, or the like. The information related to the BFD-RS may also be referred to as information related to a resource for BFR or the like.

In the present disclosure, the higher layer signaling may be any of, for example, radio resource control (RRC) signaling, medium access control (MAC) signaling, broadcast information, and the like, or a combination thereof.

For example, a MAC control element (MAC CE), a MAC protocol data unit (PDU), or the like may be used for the MAC signaling. The broadcast information may be, for example, a master information block (MIB), a system information block (SIB), remaining minimum system information (RMSI), other system information (OSI), and the like.

The MAC layer of the UE may start a given timer (which may also be referred to as a beam failure detection timer) in a case where a beam failure instance notification has been received from the PHY layer of the UE. The MAC layer of the UE may trigger BFR (e.g., start any one of random access procedures to be described later) after having received the beam failure instance notification a certain number of times (e.g., beamFailureInstanceMaxCount configured by RRC) or more before the timer expires.

The base station may determine that UE has detected a beam failure when there is no notification from the UE (e.g., time for which there is no notification exceeds a given time) or a given signal (beam recovery request in step S104) is received from the UE.

In step S103, the UE starts a search for a new candidate beam to be newly used for communication for beam recovery. The UE may measure a given RS and select a new candidate beam corresponding to the RS. The RS measured in step S103 may be referred to as a new candidate beam identification RS (NCBI-RS), a CBI-RS, a candidate beam RS (CB-RS), or the like. The NCBI-RS may be the same as or different from the BFD-RS. The new candidate beam may be referred to as a new candidate beam or simply as a candidate beam.

The UE may select a beam corresponding to RS that satisfies a given condition as a new candidate beam. The UE may determine a new candidate beam based on, for example, RS whose L1-RSRP exceeds a threshold value among configured NCBI-RSs. Note that criteria for the determination are not limited to L1-RSRP. The determination may be made using at least any one of L1-RSRP, L1-RSRQ, and L1-SINR (signal to noise interference power ratio). L1-RSRP related to an SSB may also be referred to as SS-RSRP. L1-RSRP related to a CSI-RS may also be referred to as CSI-RSRP. Similarly, L1-RSRQ related to an SSB may also be referred to as SS-RSRQ. L1-RSRQ related to a CSI-RS may also be referred to as CSI-RSRQ. Similarly, L1-SINR related to an SSB may be referred to as SS-SINR. L1-SINR related to a CSI-RS may be referred to as CSI-SINR.

Information related to NCBI-RS (e.g., an RS resource, the number, the number of ports, precoding, or the like), information related to new candidate beam identification (NCBI) (for example, the above-mentioned threshold value), or the like may be configured to (provided in notification to) the UE using higher layer signaling, or the like. The information related to the NCBI-RS may be acquired based on the information related to the BFD-RS. The information related to the NCBI-RS may also be referred to as information related to an NCBI resource or the like.

Note that BFD-RS, NCBI-RS, or the like may be replaced with a radio link monitoring reference signal (RLM-RS) .

In step S104, the UE that has identified the new candidate beam transmits a beam failure recovery request (BFRQ). The beam recovery request may be referred to as a beam recovery request signal, a beam failure recovery request signal, or the like.

The BFRQ may be transmitted using, for example, at least one of a physical uplink control channel (PUCCH), a physical random access channel (PRACH), a physical uplink shared channel (PUSCH), and a configured grant PUSCH.

The BFRQ may include information about the new candidate beam identified in step S103. A resource for the BFRQ may be associated with the new candidate beam. Beam information may be reported using, for example, a beam index (BI), a port index of a given reference signal, and a resource index (e.g., CSI-RS resource indicator (CRI), SSB resource indicator (SSBRI)), or the like.

In Rel. 15 New Radio, contention-based BFR (CB-BFR) that is BFR based on a contention-based random access (RA) procedure and contention-free BFR (CF-BFR) that is BFR based on a non-contention based random access procedure have been studied. In CB-BFR or CF-BFR, the UE may transmit a preamble (which is also referred to as an RA preamble, a physical random access channel (PRACH), an RACH preamble, or the like) as BFRQ using a PRACH resource.

Further, in New Radio, a plurality of PRACH formats (PRACH preamble formats) have been studied. random access (RA) preambles using the PRACH formats include a RACH OFDM symbol. Further, the RA preambles may include at least one of a cyclic prefix (CP) and a guard period (GP). For example, PRACH Formats 0 to 3 use a preamble sequence, which is a long sequence, in the RACH OFDM symbol. PRACH Formats A1 to A3, B1 to B4, C0, and C2 use a preamble sequence, which is a short sequence, in the RACH OFDM symbol.

A frequency of a carrier may fall within a frequency range of either Frequency Range (FR) 1 or FR2. FR1 may be a frequency range lower than a given frequency, and FR2 may be a frequency range higher than the given frequency.

Note that transmission of the BFRQ and transmission of the information about the new candidate beam may be performed at different timings. For example, the UE may transmit information about the new candidate beam after transmitting the BFRQ.

In step S105, the base station that has detected the BFRQ transmits a response signal to the BFRQ (which may also be referred to as a "gNB response" or the like) from the UE. The response signal may include reconfiguration information for one or a plurality of beams (e.g., DL-RS resource configuration information).

The response signal may be transmitted, for example, in a UE common search space of PDCCH. The response signal may be reported using PDCCH (DCI) with a cyclic redundancy check (CRC) scrambled by an identifier of the UE (e.g., a cell-radio RNTI (C-RNTI)). The UE may determine at least one of a Tx beam and a reception beam to use, based on the beam reconfiguration information.

In step S106, the UE may transmit a message indicating that beam reconfiguration has been completed to the base station. The message may be transmitted by PUCCH or PUSCH, for example.

In step S106, the UE may receive RRC signaling indicating a configuration of a TCI state used for PDCCH, or may receive MAC CE indicating the activation of the configuration.

A beam recovery success (BR success) may represent a case where the processing has reached step S106, for example. On the other hand, the beam recovery failure (BR failure) may correspond to, for example, a case where the BFRQ transmission has reached a given number of times, or a beam-failure-recovery-timer has expired.

Note that numbers of these steps are merely numbers for the description, and a plurality of these steps may be combined, or these steps may be changed in order. Further, whether or not to perform BFR may be configured for the UE using higher layer signaling.

By the way, it is specified that BFR is performed only on a given cell (for example, a primary cell) in a case where communication is performed using a plurality of cells in the existing LTE system as described above, but an application of a BFR procedure to a plurality of cells has been studied in New Radio.

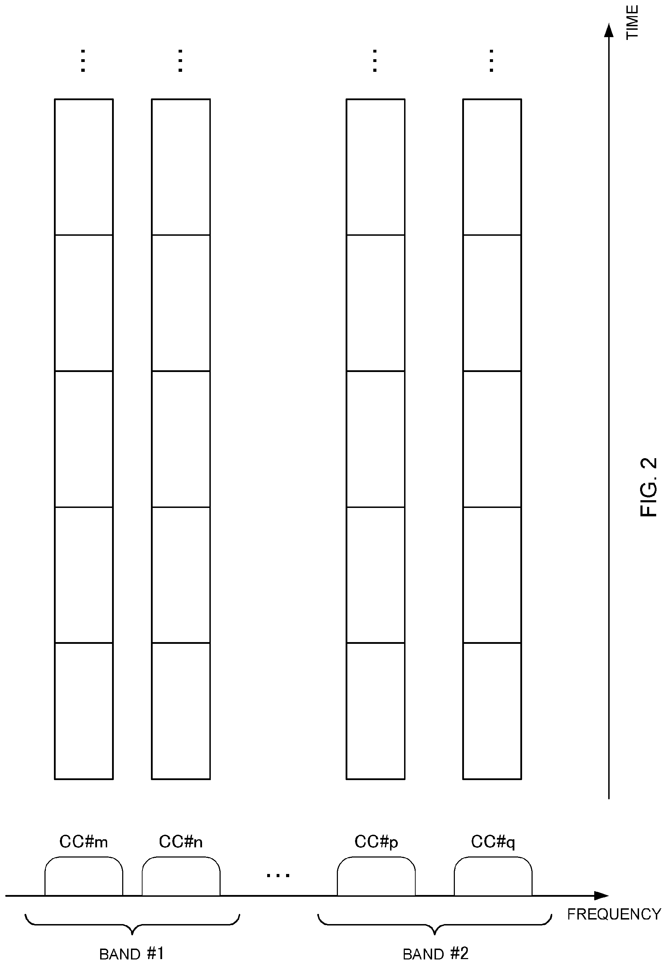

A configuration for performing communication using the plurality of cells is, for example, an Intra-band carrier aggregation (CA) or an Inter-band carrier aggregation (CA) (see Fig. 2).

Fig. 2 illustrates a case where a first band #1 and a second band #2 are used as a plurality of frequency bands. Note that the number of frequency bands applied is not limited to two, and the frequency band (or frequency domain) may be divided into three or more.

Fig. 2 illustrates a case where CC #m and CC #n are configured in the first band #1 and CC #p and CC #q are configured in the second band #2. CA between CC #m and CC #n or CA between CC #m and CC #n corresponds to the intra-band CA. On the other hand, CA between CC (e.g., CC #m or CC #n) configured in the first band #1 and CC (e.g., CC #p or CC #q) configured in the second band corresponds to the inter-band CA.

Further, the first band may correspond to the first frequency range (FR1), and the second band may correspond to the second frequency range (FR2). For example, FR1 may be a frequency band of 6 GHz or less (sub-6 GHz), and FR2 may be a frequency band higher than 24 GHz (above-24 GHz).

FR1 may be defined as a frequency range in which at least one of 15 kHz, 30 kHz, and 60 kHz is used as subcarrier spacing (SCS), and FR2 may be defined as a frequency range in which at least one of 60 kHz and 120 kHz is used as SCS. Note that the frequency bands, definitions, and the like of FR1 and FR2 are not limited thereto, and for example, FR1 may be a frequency band higher than FR2. For example, a cell using FR1 and a cell using FR2 may be configured to apply different numerologies (e.g., subcarrier spacing or the like).

As described above, a case where the BFR procedure is applied to a plurality of cells (e.g., SCells) is assumed. In such a case, it is assumed that the UE transmits BFRQ to a network (e.g., a base station), determines a new candidate beam, and transmits information about the new candidate beam when a beam failure occurs in a certain cell.

The UE needs to measure a given RS in order to determine the new candidate beam. However, when the BFR procedure in the plurality of cells is supported, how to control a configuration of the RS used for determining the new candidate beam or a method of determining the new candidate beam becomes a problem.

The present inventors have focused on a measurement type (or may be referred to as a measurement kind, a report type, or a report type) of the RS used for determining the new candidate beam. For example, it is conceivable that the UE uses L1-RSRP as a measurement result of RS. A fact that RS configured to another CC (e.g., CC #n) to which the in-band CA is applied can be used for a new candidate beam at a given CC (e.g., CC #m) has been focused since L1-RSRP has a small effect even if being considered to be substantially the same in the same band.

In this manner, the present inventors have focused on the fact that RS of another CC can be used depending on the measurement type of the RS used for determining the new candidate beam, and have conceived an operation for appropriately performing the BFR procedure (e.g., setting of a new candidate beam RS, new candidate beam determination control based on the RS, and the like).

Hereinafter, embodiments according to the present disclosure will be described in detail with reference to the drawings. The following aspects may be applied independently or may be applied in combination.

Note that L1-RSRP will be described as an example of the measurement type used for determining the new candidate beam in the following description, but the applicable measurement type is not limited thereto. In addition, L1-RSRQ and L1-SINR may be applied, or at least two of L1-RSRP, L1-RSRQ, L1-RSRQ, and L1-SINR may be applied in combination.

Further, the new candidate beam RS may be replaced a new candidate beam determination RS and RS configured for determining a new candidate beam in the following description.

### (First Aspect)

In a first aspect, when a beam failure occurs in a given cell, a new candidate beam is determined or information about the new candidate beam is reported using at least one of an RS configured in the given cell and an RS configured in another cell.

A network (e.g., a base station) may notify UE of information about a cell (e.g., SCell) to which a BFR procedure by beam failure detection is applied. When the given cell to which the BFR procedure is applied is configured, the UE monitors a beam failure detection RS in the cell. When a beam failure occurs, the UE may report this fact to the base station.

Further, when a beam failure occurs, the UE may monitor RS used for determining a new candidate beam and determine the new candidate beam. The new candidate beam may be identified by an index of RS, an RS resource, or the like. The UE reports information about the new candidate beam to the base station based on a measurement result of the RS. The UE may transmit information about RS with the best measurement result (e.g., at least one of L1-RSRP, L1-SINE, and L1-RSRQ) as the information about the new candidate beam.

### <Configuration/measurement of RS for New Candidate Beam>

RS used for determining a new candidate beam may be configured in UE in advance from a base station using higher layer signaling or the like. For example, the base station may configure a new candidate beam determination RS (new candidate beam RS) as the RS to be used for determining the new candidate beam. The RS may be at least one of CSI-RS and SSB. Further, for each cell (or each CC), information (e.g., an RS type, a cell in which RS is configured, and the like) related to the RS used for determining the new candidate beam may be separately configured.

For example, for a given cell (CC #m), CC #m may be configured as the RS used for determining the new candidate beam, CC different from CC #m may be configured, or CC different from CC #m may be configured in addition to CC #m. Further, the CC different from CC #m may be limited to CCs belonging to the same band as CC #m (CCs that perform the in-band CA with CC #m). Hereinafter, a configuration of RS and an operation of determining a new candidate beam based on the RS will be specifically described. That is, the use of RS of another cell may be allowed to determine a new candidate beam of a cell in which a beam failure has occurred.

### [RS Configuration Example 1]

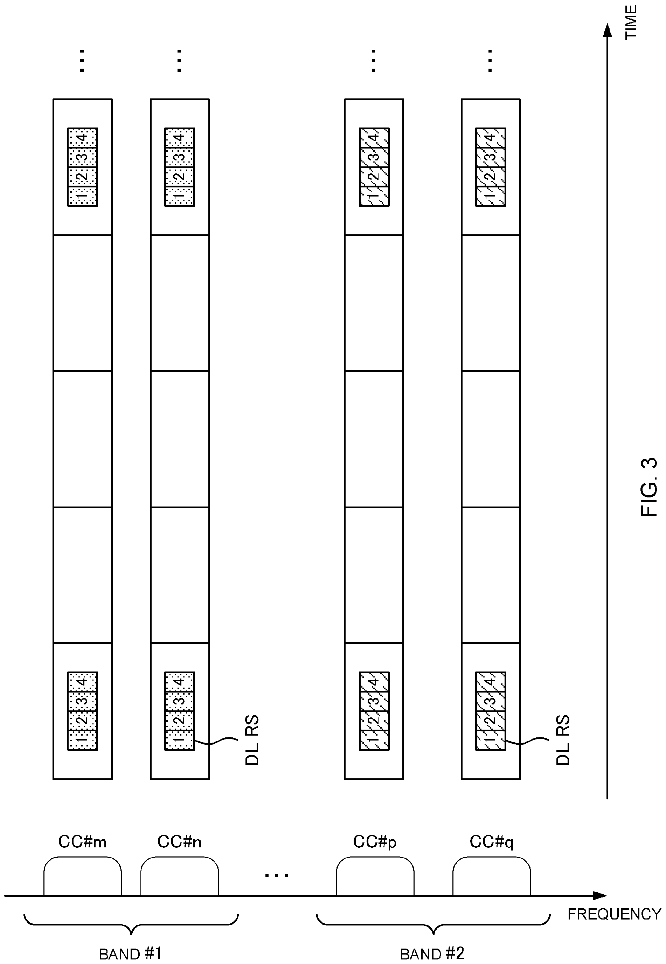

RS for a new candidate beam (or a new candidate beam index) may be configured for each cell (or CC) (see Fig. 3). Fig. 3 illustrates a case where a new candidate beam RS (e.g., RS #1 to RS #4) is configured for each CC. Different beams may be applied for each of RS #1 to RS #4 configured in different areas (e.g., consecutive symbols) in the time direction (beam sweeping).

Although Fig. 3 illustrates a case where RS #1 to RS #4 are configured at the same timing (e.g., the same slot) in a plurality of CCs, RS #1 to RS #4 may be arranged at different timings (e.g., different slots) for each CC. Further, a case where RS is configured for all the CCs is illustrated here, but RS may be configured for only some of the CCs.

UE may receive RS assuming that new candidate beam RSs (e.g., RS #1 to RS #4) are configured for each CC. For example, when detecting a beam failure of CC #m, the UE receives RS based on a new candidate beam RS configured in CC #m. For example, the UE may determine a new candidate beam (or L1-RSRP may report the best RS information to a base station) based on the RS configured in CC #m.

Alternatively, when detecting the beam failure of CC #m, the UE may determine a new candidate beam (or L1-RSRP may report the best RS information to the base station) based on RS configured in CC #n. When the RS is not transmitted in CC #m or the RS configured in CC #n can be detected earlier, it is effective to use the RS of CC #n in the same band. When RSs of a plurality of CCs are configured as new candidate beam RSs, the UE may determine a new candidate beam based on both the RS configured in CC #m and the RS configured in CC #n.

### [RS Configuration Example 2]

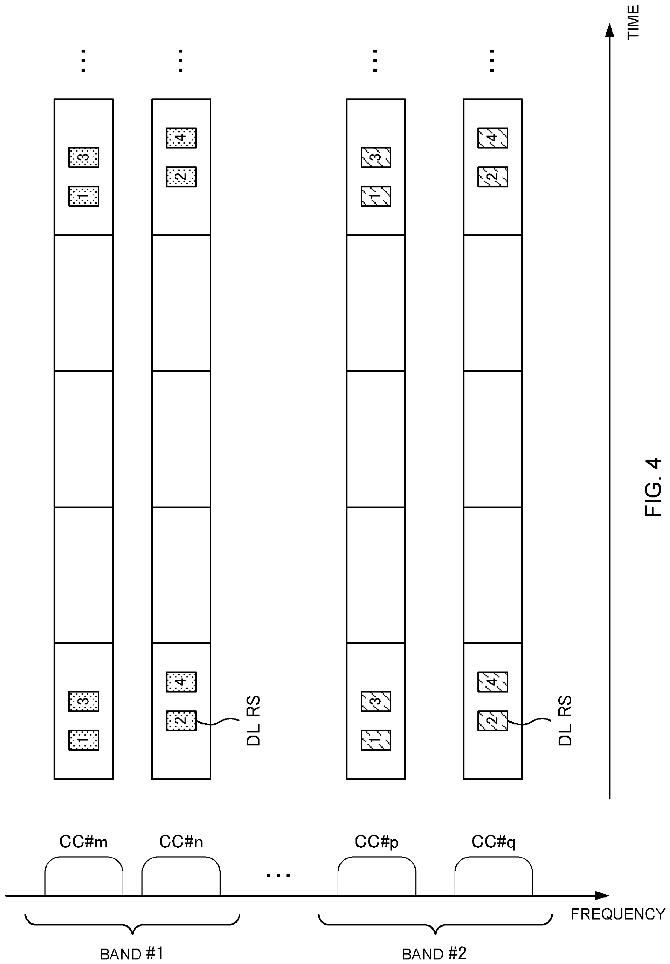

New candidate beam RSs may be configured across a plurality of cells (see Fig. 4). Fig. 4 illustrates a case where new candidate beam RSs (e.g., RS #1 to RS #4) are configured across CCs in the same band. Different beams may be applied for each of RS #1 to RS #4 configured in different areas in the time direction (beam sweeping).

UE may receive RS assuming that new candidate beam RSs (e.g., RS #1 to RS #4) are configured across a plurality of CCs in the same band. For example, when detecting a beam failure of CC #m, the UE may determine a new candidate beam (or RS information with the best measurement result (e.g., L1-RSRP) may be reported to a base station) based on RS configured in CC #m and RS configured in CC #n. In this case, the base station may configure the RS of CC #m and the RS of CC #n in the UE in advance as the new candidate beam RSs corresponding to CC #m.

In this manner, the resource utilization efficiency can be improved by arranging RSs (e.g., RS #1 to RS #4) across the plurality of CCs. Note that information about CC for which the RS (e.g., RS #1 to RS #4) is configured may be configured in advance from the base station to the UE.

### [RS Configuration Example 3]

RS of a given cell may be configured as a new candidate beam RS. For example, a specific cell may be configured as the new candidate beam RS at the time of detecting a beam failure of CC #m. The specific cell may be, for example, CC #m.

Alternatively, the specific cell may be, for example, CC #m or CC #n belonging to the same band as CC #m.

In this manner, it is possible to reduce the RS monitored by the UE by limiting the CC in which the new candidate beam RS is configured for each cell.

### (Second Aspect)

In a second aspect, an operation in a case where a new candidate beam RS is not configured for a given cell will be described.

A case where the new candidate beam RS is not configured for a given cell (or a cell belonging to the same band as the given cell) in which a BFR procedure is supported is also assumed. In such a case, UE or a base station may determine the new candidate beam using RS configured for another application (e.g., at least one of SSB and CSI-RS).

The RS configured for another application may be, for example, at least one of RS for beam failure detection (BFD), RS for L1-RSRP beam measurement (L1-RSRP beam measurement), RS for L1-SINR beam measurement (L1-SINR beam measurement), RS used for tracking, and CSI-RS for channel state information reporting. Information about an RS type (RS for another application) used for determining the new candidate beam may be configured in advance from the base station to the UE using higher layer signaling or the like.

When detecting a beam failure of a given cell (e.g., CC #m) in which the new candidate beam RS is not configured, the UE may use the RS configured for another application for CC #m (the same CC) . In this case, the UE determines the new candidate beam based on the RS for another application (or RS information with the best measurement result (e.g., L1-RSRP) may be reported to a base station).

Alternatively, when detecting a beam failure of a given cell (e.g., CC #m) in which the new candidate beam RS is not configured, the UE may determine a new candidate beam using RS configured for another application for CC #m or CC #n belonging to the same band as CC #m.

Note that the UE may determine a new candidate beam based on RS of CC #n when the new candidate beam RS is configured in CC #n belonging to the same band as CC #m. In this case, when the new candidate beam RS is not configured in all cells that belong to the band to which CC #m belongs, the UE may use the RS configured for another application for CC #m or CC #n belonging to the same band as CC #m.

A case of using the RS configured by another CC (e.g., CC #n) different from CC #m may be limited to a case where the RS of CC #m and the RS of CC #n have a quasi-co-location relationship.

### (Third Aspect)

In a third aspect, an operation in a case where RS is not configured for a given cell (or all cells belonging to the same band) will be described.

For example, a case where RS is not configured for all CCs (e.g., CC #m and CC #n) belonging to a given band (e.g., the first band #1) is assumed. In this case, even if a beam failure of CC #m is detected, it is difficult for UE to determine a new candidate beam by using RS of the first band. In such a case, the UE may be configured not to report information about the new candidate beam to a base station.

Alternatively, the RS (at least one of the new candidate beam RS and the RS used for another application) may be configured for at least one CC in the band to which a cell supporting BFR belongs. In this case, the UE may assume that the RS is configured in at least one CC in the band to which the cell supporting the BFR belongs. As a result, it is possible to avoid a state where it is difficult to determine or report a new candidate beam when a beam failure occurs.

### (Fourth Aspect)

In a fourth aspect, an operation in a case where a new candidate beam RS is configured for a first CC belonging to the same band and a new candidate beam RS is not configured for a second CC will be described.

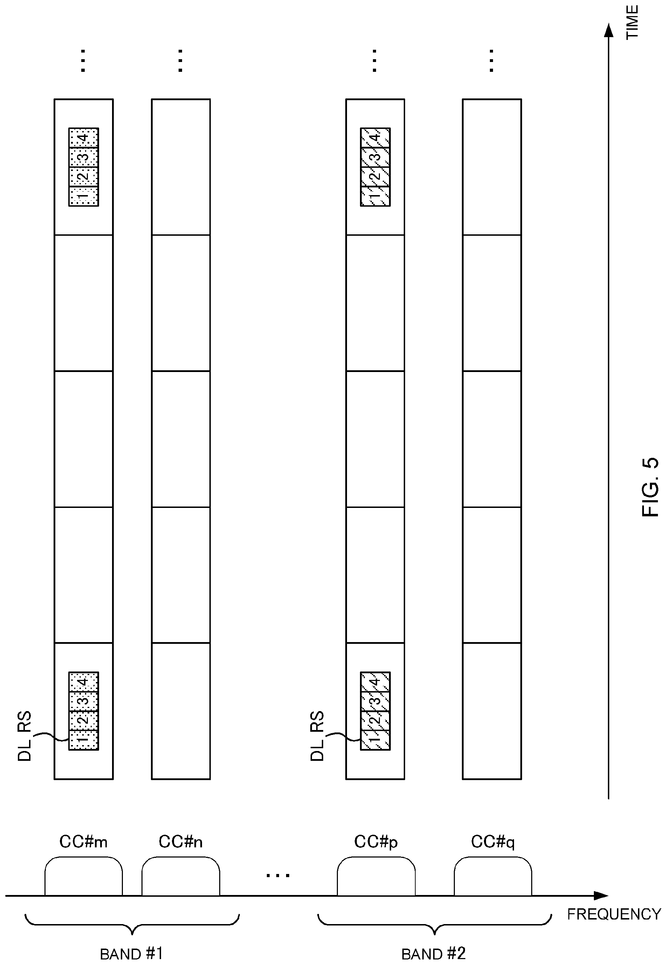

Fig. 5 illustrates a case where RS transmitted on CC #m and RS transmitted on another CC belonging to the same first band #1 as CC #m are configured as new candidate beams RS for CC #m, and a new candidate beam RS for CC #n is not configured. Further, illustrated is a case where RS transmitted on CC #p and RS transmitted on another CC belonging to the same second band #2 as CC #p are configured as new candidate beams RS for CC #p, and a new candidate beam RS for CC #q is not configured.

Hereinafter, an example of an operation of determining a new candidate beam when a beam failure of CC #n occurs will be described. Note that the first band #1 will be described in the following description, but the present invention may be similarly applied to the second band #2.

### [Operation Example 1]

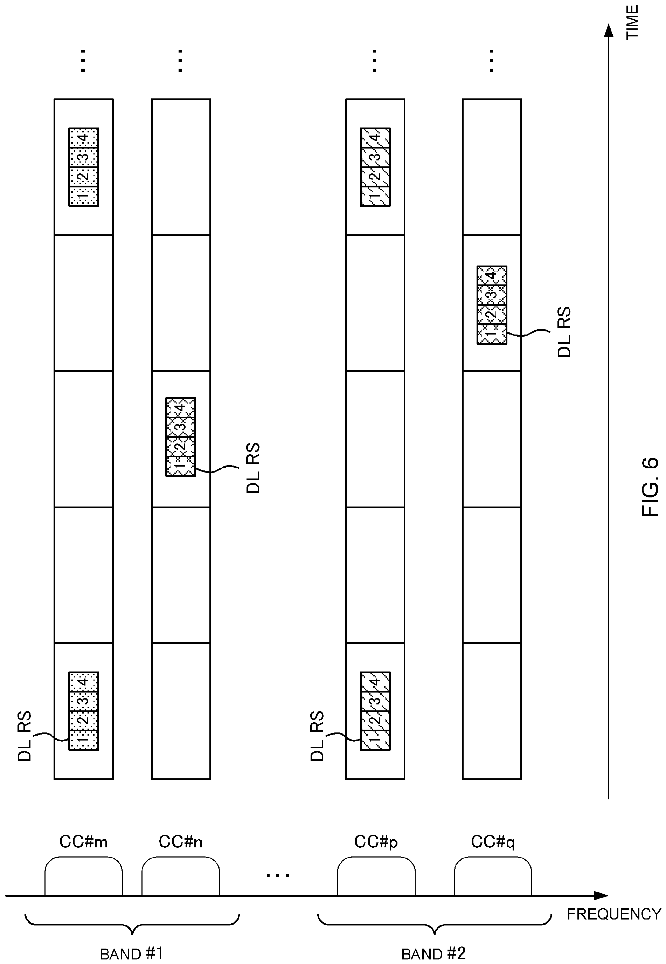

UE may assume that RS (e.g., RS for another application) transmitted in CC #n is used for new candidate beam determination in the CC #n (see Fig. 6). The RS transmitted in CC #n may have a quasi-co-location relationship (e.g., type D QCL) with the new candidate beam RS configured in CC #m.

Whether or not to apply the RS transmitted in CC #n may be configured for the UE by higher layer signaling or the like from a base station.

As a result, even when a beam failure occurs in CC in which the new candidate beam RS is not configured, the new candidate beam can be appropriately determined based on the given RS.

### [Operation Example 2]

UE may assume that a new candidate beam RS (e.g., RS transmitted in CC #m or RS transmitted in another CC in the same band) configured for CC #m belonging to the same band is used for new candidate beam determination in CC #n. That is, the new candidate beam RS is commonly used between CCs in the same band.

Whether or not to apply the new candidate beam RS configured for another CC belonging to the same band may be configured for the UE by higher layer signaling or the like from a base station.

As a result, even when a beam failure occurs in CC in which the new candidate beam RS is not configured, the new candidate beam can be appropriately determined based on the given RS.

### (Variation)

Although the case where L1-RSRP is used in the new candidate beam determination is assumed in the above-mentioned first to fourth aspects, the present invention is not limited thereto. L1-RSRQ and L1-SINR may be used instead of or in addition to L1-RSRP. Selection of a measurement type of a new candidate beam and an operation of UE will be described hereinafter.

The measurement type applied to the new candidate beam determination may be configured in advance from a base station for the UE using higher layer signaling or the like. For example, the base station may configured at least one of L1-RSRP, L1-RSRQ, and L1-SINR in the UE as the measurement type of the new candidate beam.

The UE controls the new candidate beam determination based on the measurement type configured from the base station. For example, the UE may assume that a default measurement type (e.g., L1-RSRP) is selected if a given measurement type (e.g., L1-SINR) is not configured as the measurement type. In this case, the UE may assume that a new candidate beam RS corresponding to a given CC is configured for at least one of the given CC and a different CC belonging to the same band.

In the case of using L1-RSRP, there is a small effect even if measurement results are considered to be substantially the same between CCs belonging to a given frequency range (e.g., the same band), and thus, RS of another CC belonging to the same band can be used.

When L1-SINR is configured (e.g., new candidate beam determination or reporting based on the L1-SINR is configured) as the measurement type, the UE may determine a new candidate beam based on at least the L1-SINR. In this case, the UE may assume that RS transmitted in a given CC is configured as a new candidate beam RS corresponding to the given CC.

Since an effect of an interference is not ignorable even between CCs belonging to the same band, it is effective to use RS configured to the same CC as a CC in which a beam failure has occurred in the case where the new candidate beam is determined based on L1-SINR.

When a beam operation based on the L1-SINR (e.g., beam reporting based on L1-SINR) is configured, the UE may determine a new candidate beam based on at least the L1-SINR. In this case, the UE may assume that RS transmitted in a given CC is configured as a new candidate beam RS corresponding to the given CC.

Since an effect of an interference is not ignorable even between CCs belonging to the same band, it is effective to use RS configured to the same CC as a CC in which a beam failure has occurred in the case where the new candidate beam is determined based on L1-SINR.

### (Radio Communication System)

Hereinafter, a configuration of a radio communication system according to one embodiment of the present disclosure will be described. In this radio communication system, communication is performed using any one or a combination of the radio communication methods according to the above-mentioned respective embodiments of the present disclosure.

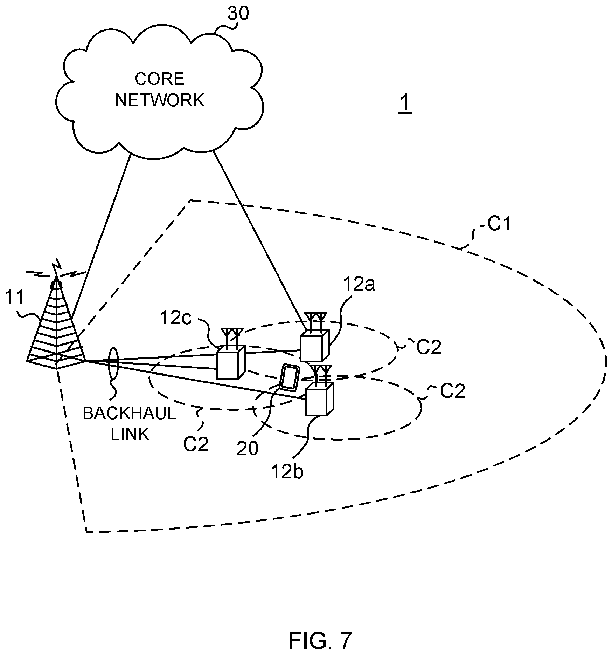

Fig. 7 is a diagram illustrating an example of a schematic configuration of a radio communication system according to one embodiment. A radio communication system 1 may be a system that implements communication using long term evolution (LTE), 5th generation mobile communication system new radio (5G NR), and the like specified by third generation partnership project (3GPP).

Further, the radio communication system 1 may support dual connectivity (multi-RAT dual connectivity (MR-DC)) between a plurality of radio access technologies (RATs). MR-DC may include dual connectivity between LTE (Evolved Universal Terrestrial Radio Access (E-UTRA)) and NR (E-UTRA-NR Dual Connectivity (EN-DC)), dual connectivity between NR and LTE (NR-E-UTRA Dual Connectivity (NE-DC)), and the like.

In EN-DC, an LTE (E-UTRA) base station (eNB) is a master node (MN), and an NR base station (gNB) is a secondary node (SN). In NE-DC, an NR base station (gNB) is MN, and an LTE (E-UTRA) base station (eNB) is SN.

The radio communication system 1 may support dual connectivity between a plurality of base stations in the same RAT (e.g., dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be located in at least one cell. The arrangement, number, and the like of cells and the user terminals 20 are not limited to the aspects illustrated in the drawings. Hereinafter, the base stations 11 and 12 will be collectively referred to as "base stations 10", unless these are distinguished from each other.

The user terminal 20 may be connected to at least one of the plurality of base stations 10. The user terminal 20 may use at least one of carrier aggregation (CA) and dual connectivity (DC) using a plurality of component carriers (CC).

Each CC may be included in at least one of a first frequency band (Frequency Range 1 (FR1)) and a second frequency band (Frequency Range 2 (FR2)). The macro cell C1 may be included in FR1, and the small cell C2 may be included in FR2. For example, FR1 may be a frequency band of 6 GHz or less (sub-6 GHz), and FR2 may be a frequency band higher than 24 GHz (above-24 GHz). Note that the frequency bands, definitions, and the like of FR1 and FR2 are not limited to these, and for example, FR1 may be a frequency band higher than FR2.

Further, the user terminal 20 may perform communication in each CC using at least one of time division duplex (TDD) and frequency division duplex (FDD).

The plurality of base stations 10 may be connected by wire (e.g., an optical fiber or an X2 interface in compliance with common public radio interface (CPRI)) or by radio (e.g., NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

A base station 10 may be connected to a core network 30 via another base station 10 or directly. The core network 30 may include at least one of, for example, an evolved packet core (EPC), a 5G core network (5GCN), a next generation core (NGC), and the like.

The user terminal 20 may correspond to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that another radio access method (e.g., another single carrier transmission method or another multi-carrier transmission method) may be used as the UL and DL radio access method in the radio communication system 1.

In the radio communication system 1, a physical downlink shared channel (PDSCH) shared by the respective user terminals 20, a physical broadcast channel (PBCH), a physical downlink control channel (PDCCH), and the like may be used as downlink channels.

Further, a physical uplink shared channel (PUSCH) shared by the respective user terminals 20, a physical uplink control channel (PUCCH), a physical random access channel (PRACH), and the like may be used as uplink channels in the radio communication system 1.

User data, higher layer control information, a system information block (SIB) are transmitted by PDSCH. PUSCH may transmit user data, higher layer control information, and the like. Further, the PBCH may transmit a master information block (MIB).

PDCCH may transmit lower layer control information. The lower layer control information may include, for example, downlink control information (DCI) including scheduling information of at least one of PDSCH and PUSCH.

Note that DCI that schedules PDSCH may be referred to as DL assignment, DL DCI, or the like, and DCI scheduling PUSCH may be referred to as UL grant, UL DCI, or the like. Note that PDSCH may be replaced with DL data, and PUSCH may be replaced with UL data.

A control resource set (CORESET) and a search space may be used to detect PDCCH. CORESET corresponds to a resource that searches for DCI. The search space corresponds to a search area and a search method for PDCCH candidates. One CORESET may be associated with one or more search spaces. UE may monitor CORESET associated with a certain search space based on search space configuration.

One search space may correspond to a PDCCH candidate corresponding to one or more aggregation levels. One or more search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery confirmation information (e.g., hybrid automatic repeat request acknowledgement (HARQ-ACK), which may be referred to as ACK/NACK or the like), and a scheduling request (SR) may be transmitted by PUCCH. By means of PRACH, a random access preamble for establishing a connection with a cell may be transmitted.

Note that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as DL-RS.

The synchronization signal may be at least one of, for example, a primary synchronization signal (PSS) and a secondary synchronization signal (SSS). A signal block including SS (PSS or SSS) and PBCH (and DMRS for PBCH) may be referred to as an SS/PBCH block, an SS Block (SSB), and the like. Note that SS, SSB, or the like may also be referred to as a reference signal.

Further, a sounding reference signal (SRS), a demodulation reference signal (DMRS), or the like may be transmitted as an uplink reference signal (UL-RS) in the radio communication system 1. Note that DMRS may be referred to as a "user terminal-specific reference signal (UE-specific reference signal)".

### (Base Station)

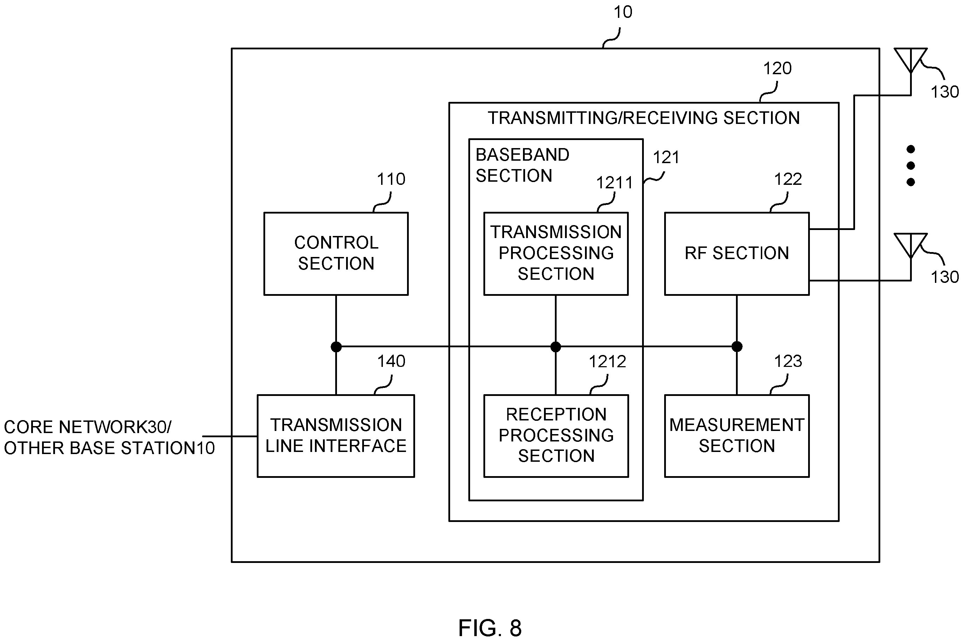

Fig. 8 is a diagram illustrating an example of a configuration of a base station according to one embodiment. The base station 10 includes a control section 110, a transmission/reception section 120, a transmission/reception antenna 130, and a transmission line interface 140. Note that one or more of the control sections 110, one or more of the transmission/reception sections 120, one or more of the transmission/reception antennas 130, and one or more of the transmission line interfaces 140 may be included.

Note that this example mainly describes functional blocks of characteristic parts in the present embodiment, and it may be assumed that the base station 10 also includes other functional blocks necessary for radio communication. A part of processing of each section described below may be omitted.

The control section 110 controls the entire base station 10. The control section 110 can be constituted by a controller, a control circuit, or the like, which is described based on common recognition in the technical field to which the present disclosure relates.

The control section 110 may control signal generation, scheduling (e.g., resource allocation or mapping), and the like. The control section 110 may control transmission/reception, measurement, and the like using the transmission/reception section 120, the transmission/reception antenna 130, and the transmission line interface 140. The control section 110 may generate data to be transferred as a signal, control information, a sequence, and the like, and may transfer the data, the control information, the sequence, and the like to the transmission/reception section 120. The control section 110 may perform call processing (such as configuration or releasing) of a communication channel, management of the state of the base station 10, and management of a radio resource.

The transmission/reception section 120 may include a base band section 121, a radio frequency (RF) section 122, and a measurement section 123. The base band section 121 may include a transmission processing section 1211 and a reception processing section 1212. The transmission/reception section 120 can be constituted by a transmitter/receiver, an RF circuit, a base band circuit, a filter, a phase shifter, a measurement circuit, a transmission/reception circuit, and the like, which are described based on common recognition in the technical field to which the present disclosure relates.

The transmission/reception section 120 may be constituted as an integrated transmission/reception section, or may be constituted by a transmission section and a reception section. The transmission section may be constituted by the transmission processing section 1211 and the RF section 122. The reception section may be constituted by the reception processing section 1212, the RF section 122, and the measurement section 123.

The transmission/reception antenna 130 can be constituted by an antenna described based on common recognition in the technical field to which the present disclosure relates, for example, an array antenna.

The transmission/reception section 120 may transmit the above-described downlink channel, synchronization signal, downlink reference signal, and the like. The transmission/reception section 120 may receive the above-described uplink channel, uplink reference signal, and the like.

The transmission/reception section 120 may form at least one of a Tx beam and a reception beam using digital beam forming (e.g., precoding), analog beam forming (e.g., phase rotation), and the like.

The transmission/reception section 120 (transmission processing section 1211) may perform packet data convergence protocol (PDCP) layer processing, radio link control (RLC) layer processing (e.g., RLC retransmission control), medium access control (MAC) layer processing (e.g., HARQ retransmission control), and the like on data, control information, and the like acquired from the control section 110 to generate a bit string to be transmitted.

The transmission/reception section 120 (transmission processing section 1211) may perform transmission processing such as channel coding (which may include error correction coding), modulation, mapping, filtering processing, discrete Fourier transform (DFT) processing (if necessary), inverse fast Fourier transform (IFFT) processing, precoding, and digital-analog transform on the bit string to be transmitted, and may output a base band signal.

The transmission/reception section 120 (RF section 122) may perform modulation to a radio frequency band, filtering processing, amplification, and the like on the base band signal, and may transmit a signal in the radio frequency band via the transmission/reception antenna 130.

Meanwhile, the transmission/reception section 120 (RF section 122) may perform amplification, filtering processing, demodulation to a base band signal, and the like on the signal in the radio frequency band received by the transmission/reception antenna 130.

The transmission/reception section 120 (reception processing section 1212) may apply reception processing such as analog-digital transform, fast Fourier transform (FFT) processing, inverse discrete Fourier transform (IDFT) processing (if necessary), filtering processing, demapping, demodulation, decoding (which may include error correction decoding), MAC layer processing, RLC layer processing, and PDCP layer processing on the acquired base band signal to acquire user data and the like.

The transmission/reception section 120 (measurement section 123) may perform measurement on the received signal. For example, the measurement section 123 may perform radio resource management (RRM) measurement, channel state information (CSI) measurement, and the like based on the received signal. The measurement section 123 may measure received power (e.g., reference signal received power (RSRP)), received quality (e.g., reference signal received quality (RSRQ), a signal to interference plus noise ratio (SINR), or a signal to noise ratio (SNR)), signal strength (e.g., received signal strength indicator (RSSI)), propagation path information (e.g., CSI), and the like. The measurement result may be output to the control section 110.

The transmission line interface 140 may transmit/receive a signal (backhaul signaling) to and from an apparatus included in the core network 30, other base stations 10, and the like, and may acquire, transmit, and the like user data (user plane data), control plane data, and the like for the user terminal 20.

Note that the transmission section and the reception section of the base station 10 in the present disclosure may be constituted by at least one of the transmission/reception section 120, the transmission/reception antenna 130, and the transmission line interface 140.

Note that the transmission/reception section 120 transmits RS (e.g., at least one of the new candidate beam RS and the RS configured for another application) used for the new candidate beam determination. Further, the transmission/reception section 120 may transmit information (e.g., information about at least one of an RS type, CC in which the RS is configured, and a cycle of the RS) regarding the RS applied to each CC as the new candidate beam RS. Further, the transmission/reception section 120 may transmit information about a measurement kind (or measurement type) applied to the new candidate beam RS. Further, the transmission/reception section 120 receives information about a new candidate beam or a given DL reference signal.

The control section 110 controls allocation of RSs used for the new candidate beam determination. For example, the control section 110 may configure a DL reference signal used to determine the new candidate beam or the given DL reference signal for each cell. Alternatively, the control section 110 may configure the DL reference signal used to determine a new candidate beam or a given DL reference signal across a plurality of cells included in a given frequency range.

### (User Terminal)

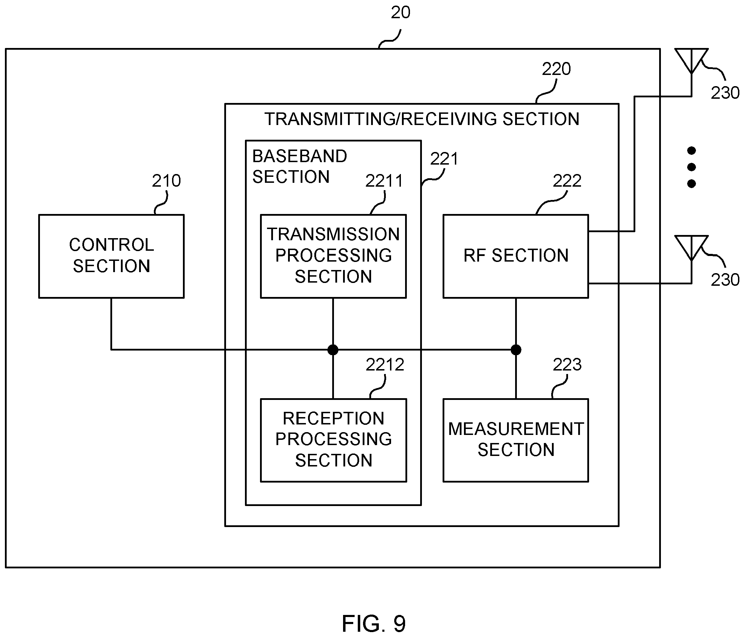

Fig. 9 is a diagram illustrating an example of a configuration of a user terminal according to one embodiment. The user terminal 20 includes a control section 210, a transmission/reception section 220, and a transmission/reception antenna 230. Note that one or more of the control sections 210, one or more of the transmission/reception sections 220, and one or more of the transmission/reception antennas 230 may be included.

Note that, although this example mainly describes a functional block which is a characteristic part of the present embodiment, it may be assumed that the user terminal 20 also has another functional block necessary for radio communication. A part of processing of each section described below may be omitted.

The control section 210 controls the entire user terminal 20. The control section 210 can be constituted by a controller, a control circuit, or the like, which is described based on common recognition in the technical field to which the present disclosure relates.

The control section 210 may control signal generation, mapping, and the like. The control section 210 may control transmission/reception, measurement, and the like using the transmission/reception section 220 and the transmission/reception antenna 230. The control section 210 may generate data to be transferred as a signal, control information, a sequence, and the like, and may transfer the data, the control information, the sequence, and the like to the transmission/reception section 220.

The transmission/reception section 220 may include a base band section 221, an RF section 222, and a measurement section 223. The base band section 221 may include a transmission processing section 2211 and a reception processing section 2212. The transmission/reception section 220 can be constituted by a transmitter/receiver, an RF circuit, a base band circuit, a filter, a phase shifter, a measurement circuit, a transmission/reception circuit, and the like, which are described based on common recognition in the technical field to which the present disclosure relates.

The transmission/reception section 220 may be constituted as an integrated transmission/reception section, or may be constituted by a transmission section and a reception section. The transmission section may be constituted by the transmission processing section 2211 and the RF section 222. The reception section may be constituted by the reception processing section 2212, the RF section 222, and the measurement section 223.

The transmission/reception antenna 230 can be constituted by an antenna described based on common recognition in the technical field to which the present disclosure relates, for example, an array antenna.

The transmission/reception section 220 may receive the above-described downlink channel, synchronization signal, downlink reference signal, and the like. The transmission/reception section 220 may transmit the above-described uplink channel, uplink reference signal, and the like.

The transmission/reception section 220 may form at least one of a Tx beam and a reception beam using digital beam forming (e.g., precoding), analog beam forming (e.g., phase rotation), and the like.

The transmission/reception section 220 (transmission processing section 2211) may perform PDCP layer processing, RLC layer processing (for example, RLC retransmission control), MAC layer processing (for example, HARQ retransmission control), and the like, for example, on data acquired from the control section 210 or control information to generate a bit string to be transmitted.

The transmission/reception section 220 (transmission processing section 2211) may perform transmission processing such as channel coding (which may include error correction coding), modulation, mapping, filtering processing, DFT processing (if necessary), IFFT processing, precoding, or digital-analog transform on a bit string to be transmitted, and may output a base band signal.

Note that whether or not to apply DFT processing may be determined based on configuration of transform precoding. When transform precoding is enabled for a channel (for example, PUSCH), the transmission/reception section 220 (transmission processing section 2211) may perform DFT processing as the above-mentioned transmission processing in order to transmit the channel using a DFT-s-OFDM waveform. The DFT processing is not necessarily performed as the above-mentioned transmission processing when transform precoding is not enabled for a channel (for example, PUSCH).

The transmission/reception section 220 (RF section 222) may perform modulation to a radio frequency band, filtering processing, amplification, and the like on the base band signal, and may transmit a signal in the radio frequency band via the transmission/reception antenna 230.

Meanwhile, the transmission/reception section 220 (RF section 222) may perform amplification, filtering processing, demodulation to a base band signal, and the like on the signal in the radio frequency band received by the transmission/reception antenna 230.

The transmission/reception section 220 (reception processing section 2212) may acquire user data and the like by applying reception processing such as analog-digital transform, FFT processing, IDFT processing (if necessary), filtering processing, demapping, demodulation, decoding (which may include error correction decoding), MAC layer processing, RLC layer processing, or PDCP layer processing on the acquired base band signal.

The transmission/reception section 220 (measurement section 223) may perform measurement on the received signal. For example, the measurement section 223 may perform RRM measurement, CSI measurement, and the like based on the received signal. The measurement section 223 may measure received power (e.g., RSRP), received quality (e.g., RSRQ, SINR, or SNR), signal strength (e.g., RSSI), propagation path information (e.g., CSI), and the like. The measurement result may be output to the control section 210.

Note that the transmission section and the reception section of the user terminal 20 in the present disclosure may include at least one of the transmission/reception section 220 and the transmission/reception antenna 230.

Note that the transmission/reception section 220 receives the RS (e.g., at least one of the new candidate beam RS and the RS configured for another application) used for the new candidate beam determination. Further, the transmission/reception section 220 may receive information (e.g., information about at least one of an RS type, CC in which the RS is configured, and a cycle of the RS) regarding the RS applied to each CC as the new candidate beam RS. Further, the transmission/reception section 220 may receive information about the measurement kind (or measurement type) applied to the new candidate beam RS. Further, the transmission/reception section 220 transmits information about a new candidate beam or a given DL reference signal.

When a beam failure in a given cell is detected, the control section 210 determines a new candidate beam or a given DL reference signal based on at least one of a DL reference signal transmitted in the given cell and a DL reference signal transmitted in another cell configured in the same given frequency range as the given cell.

The DL reference signal used to determine a new candidate beam or a given DL reference signal may be configured for each cell. Alternatively, the DL reference signal used to determine a new candidate beam or a given DL reference signal may be configured across a plurality of cells included in a given frequency range.

When the DL reference signal is not configured in a given cell and the other cells, the control section 210 may perform control so as not to transmit the information related to the new candidate beam or the given DL reference signal. Further, when the DL reference signal for the new candidate beam is not configured for a given cell, the control section 210 may determine a new candidate beam or a given DL reference signal using the given DL reference signal that is in quasi-co-location with a DL reference signal configured in another cell in the given cell.

### (Hardware Configuration)

Note that the block diagrams that have been used to describe the above embodiments illustrate blocks in functional units. These functional blocks (configuration units) may be implemented in arbitrary combinations of at least one of hardware or software. Further, the method for implementing each functional block is not particularly limited. That is, each functional block may be achieved by a single device physically or logically aggregated, or may be achieved by directly or indirectly connecting two or more physically or logically separate devices (using wires, radio, or the like, for example) and using these plural devices. The functional block may be achieved by combining the one device or the plurality of devices with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, assigning, and the like. For example, a functional block (configuration unit) that causes transmission to function may be referred to as a transmitting unit, a transmitter, and the like. In any case, as described above, the implementation method is not particularly limited.

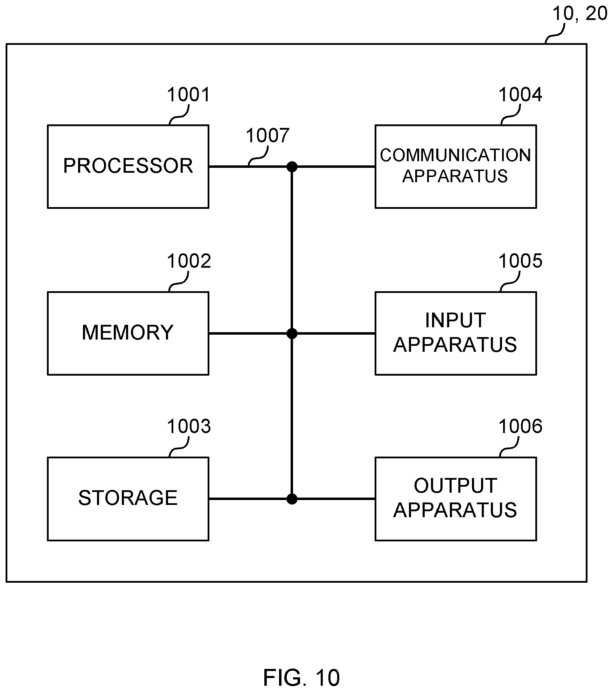

For example, the base station, the user terminal, and the like according to one embodiment of the present disclosure may function as a computer that executes the processing of the radio communication method of the present disclosure. Fig. 10 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, an apparatus, a section, or a unit can be replaced with each other. The hardware configuration of the base station 10 and the user terminal 20 may be designed to include one or more of the apparatuses illustrated in the drawings, or may be designed not to include some apparatuses.

For example, although only one processor 1001 is illustrated, a plurality of processors may be provided. Further, the processing may be executed by one processor, or the processing may be executed in sequence or using other different methods simultaneously by two or more processors. Note that the processor 1001 may be implemented with one or more chips.

Each function of the base station 10 and the user terminal 20 is implemented by, for example, reading given software (program) into hardware such as the processor 1001 and the memory 1002, and by controlling the operation in the processor 1001, the communication in the communication apparatus 1004, and at least one of the reading or writing of data in the memory 1002 and the storage 1003.

The processor 1001 may control the whole computer by, for example, running an operating system. As the processor 1001, provided may be a central processing unit (CPU) including an interface with peripheral equipment, a control device, an operation device, a register, and the like. For example, at least a part of the above-described control section 110 (210), transmission/reception section 120 (220), and the like may be implemented by the processor 1001.

Further, the processor 1001 reads programs (program codes), software modules, data, and the like from at least one of the storage 1003 or the communication apparatus 1004 into the memory 1002, and executes various types of processing according to these. As the program, a program to cause a computer to execute at least a part of the operation described in the above-described embodiment is used. For example, the control section 110 (210) may be implemented by a control program that is stored in the memory 1002 and operates in the processor 1001, and another functional block may be implemented similarly.

The memory 1002 is a computer-readable recording medium, and may include at least one of, for example, a read only memory (ROM), an erasable programmable rom (EPROM), an electrically EPROM (EEPROM), a random access memory (RAM), and other appropriate storage media. The memory 1002 may be referred to as a "register", a "cache", a "main memory (primary storage apparatus)", and the like. The memory 1002 can store a program (program code), a software module, and the like, which are executable for implementing the radio communication method according to one embodiment of the present disclosure.

The storage 1003 is a computer-readable recording medium, and may include at least one of, for example, a flexible disk, a floppy (registered trademark) disk, a magneto-optical disk (e.g., compact disc (compact disc ROM (CD-ROM) and the like), digital versatile disc, Blu-ray (registered trademark) disk), a removable disk, a hard disk drive, a smart card, a flash memory device (e.g., card, stick, and key drive), a magnetic stripe, a database, a server, and other appropriate storage media. The storage 1003 may be referred to as "secondary storage apparatus".

The communication apparatus 1004 is hardware (transmitting/receiving device) for performing inter-computer communication via at least one of a wired network or a wireless network, and for example, is referred to as "network device", "network controller", "network card", "communication module", and the like. The communication apparatus 1004 may include a high frequency switch, a duplexer, a filter, a frequency synthesizer, and the like in order to implement at least one of, for example, frequency division duplex (FDD) and time division duplex (TDD). For example, the transmission/reception section 120 (220), the transmission/reception antenna 130 (230), and the like described above may be implemented by the communication apparatus 1004. The transmission/reception section 120 (220) may be implemented by physically or logically separating a transmission section 120a (220a) and a reception section 120b (220b) from each other.

The input apparatus 1005 is an input device that receives an input from outside (e.g., a keyboard, a mouse, a microphone, a switch, a button, a sensor, and the like). The output apparatus 1006 is an output device that performs output to the outside (e.g., a display, a speaker, a light emitting diode (LED) lamp, and the like). Note that the input apparatus 1005 and the output apparatus 1006 may be provided in an integrated structure (e.g., a touch panel).

Further, the respective apparatuses, such as the processor 1001 and the memory 1002, are connected by the bus 1007 to communicate information. The bus 1007 may be formed with a single bus, or may be formed with buses that vary between pieces of apparatus.

Further, the base station 10 and the user terminal 20 may include hardware such as a microprocessor, a digital signal processor (DSP), an application specific integrated circuit (ASIC), a programmable logic device (PLD), and a field programmable gate array (FPGA), and some or all of the functional blocks may be implemented using the hardware. For example, the processor 1001 may be implemented with at least one of these pieces of hardware.

### (Modification)

Note that terms described in the present disclosure and terms necessary for understanding the present disclosure may be replaced with other terms that have the same or similar meanings. For example, a channel, a symbol, and a signal (signal or signaling) may be read interchangeably. Further, the signal may be a message. A reference signal can be abbreviated as an "RS", and may be referred to as a "pilot", a "pilot signal", and the like, depending on which standard applies. Further, a "component carrier (CC)" may be referred to as a "cell", a "frequency carrier", a "carrier frequency", and the like.

A radio frame may include one or a plurality of durations (frames) in the time domain. Each of the one or plurality of periods (frames) constituting the radio frame may be referred to as a "subframe". Furthermore, a subframe may include one or a plurality of slots in the time domain. A subframe may be a fixed time duration (e.g., 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in a frequency domain, specific windowing processing performed by a transceiver in the time domain, and the like.

The slot may include one or a plurality of symbols (e.g., orthogonal frequency division multiplexing (OFDM) symbol and single carrier frequency division multiple access (SC-FDMA) symbol) in the time domain. Further, the slot may be a time unit based on numerology.

The slot may include a plurality of mini slots. Each mini slot may include one or a plurality of symbols in the time domain. Further, the mini slot may be referred to as a "subslot". Each mini slot may include fewer symbols than a slot. PDSCH (or PUSCH) transmitted in a time unit larger than a mini slot may be referred to as PDSCH (PUSCH) mapping type A. PDSCH (or PUSCH) transmitted using the mini slot may be referred to as PDSCH (PUSCH) mapping type B.

All the radio frame, the subframe, the slot, the mini slot and the symbol represent the time units at the time of transmitting a signal. The radio frame, the subframe, the slot, the mini slot, and the symbol may be called by other applicable names, respectively. Note that the time units such as the frame, the subframe, the slot, the mini slot, and the symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (e.g., one to thirteen symbols), or may be a period longer than 1 ms. Note that a unit that represents TTI may be referred to as a slot, a mini slot, and the like, instead of the subframe.

Here, TTI refers to the minimum time unit of scheduling in radio communication, for example. For example, in the LTE system, a base station performs scheduling to allocate radio resources (a frequency bandwidth and transmission power that can be used in each user terminal and the like) to each user terminal in TTI units. Note that the definition of TTI is not limited thereto.

TTI may be a transmission time unit of a channel-encoded data packet (transport block), a code block, a codeword, and the like, or may be a processing unit of scheduling, link adaptation, and the like. Note that, when TTI is given, a time interval (e.g., the number of symbols) in which the transport block, the code block, the codeword, and the like are actually mapped may be shorter than the TTI.

Note that, when one slot or one mini slot is referred to as a "TTI", one or more TTIs (that is, one or more slots or one or more mini slots) may be the minimum time unit of scheduling. Further, the number of slots (the number of mini slots) constituting this minimum time unit of scheduling may be controlled.

TTI having a period of 1 ms may be referred to as usual TTI (TTI in 3GPP Rel. 8 to 12), normal TTI, long TTI, a usual subframe, a normal subframe, a long subframe, a slot, or the like. TTI shorter than the usual TTI may be referred to as shortened TTI, short TTI, partial TTI (or fractional TTI), a shortened subframe, a short subframe, a mini slot, a subslot, a slot, and the like.

Note that long TTI (e.g., normal TTI or a subframe) may be replaced with TTI having a time length exceeding 1 ms, and short TTI (for example, shortened TTI) may be replaced with TTI having a TTI duration less than the TTI duration of long TTI and equal to or more than 1 ms.

A resource block (RB) is a resource allocation unit in the time domain and the frequency domain, and may include one or a plurality of consecutive subcarriers in the frequency domain. The number of subcarriers included in the RB may be the same regardless of the numerology, and may be twelve, for example. The number of subcarriers included in the RB may be determined based on the numerology.

Further, RB may include one or a plurality of symbols in the time domain, and may have a length of one slot, one mini slot, one subframe, or one TTI. One TTI, one subframe, and the like may each include one or a plurality of resource blocks.

Note that one or a plurality of RBs may be referred to as a physical resource block (Physical RB (PRB)), a subcarrier group (SCG), a resource element group (REG), a PRB pair, an RB pair, and the like.

Further, a resource block may include one or a plurality of resource elements (REs). For example, one RE may be a radio resource field of one subcarrier and one symbol.

The bandwidth part (BWP) (which may be called partial bandwidth and the like) may represent a subset of consecutive common resource blocks (RB) for certain numerology in a certain carrier. Here, the common RB may be specified by the index of the RB based on a common reference point of the carrier. The PRB may be defined in a BWP and numbered within the BWP.

BWP may include BWP for UL (UL BWP) and BWP for DL (DL BWP). One or a plurality of BWPs may be configured within one carrier for UE.

At least one of the configured BWPs may be active, and the UE does not necessarily assume to transmit or receive a given signal/channel outside the active BWP. Note that "cell", "carrier", and the like in the present disclosure may be replaced with "BWP".

Note that the structures of the above-mentioned radio frame, subframe, slot, mini slot, symbol, and the like are merely examples. For example, configurations of the number of subframes in a radio frame, the number of slots per subframe or radio frame, the number of mini slots in a slot, the number of symbols and RBs in a slot or a mini slot, the number of subcarriers in RB, the number of symbols in TTI, a symbol length, a cyclic prefix (CP) length, and the like can be variously changed.

Further, the information, parameters, and the like described in the present disclosure may be represented using absolute values or relative values with respect to given values, or may be represented using other corresponding information. For example, the radio resource may be indicated by a given index.

The names used for the parameters and the like in the present disclosure are not limited names in any respect. Furthermore, any mathematical expression or the like that uses these parameters may differ from those explicitly disclosed in the present disclosure. Since various channels (e.g., PUCCH and PDCCH) and information elements can be identified by any suitable name, various names allocated to these various channels and information elements are not limited names in any respect.

The information, signals, and the like described in the present disclosure may be represented by using a variety of different technologies. For example, data, an instruction, a command, information, a signal, a bit, a symbol, a chip, or the like that may be mentioned throughout the above description may be represented by a voltage, a current, an electromagnetic wave, a magnetic field or magnetic particles, an optical field or photons, or an arbitrary combination thereof.

Further, information, a signal, and the like can be output in at least one of a direction from a higher layer to a lower layer and a direction from a lower layer to a higher layer. Information, a signal, and the like may be input/output via a plurality of network nodes.

The input and/or output information, signal, and the like can be stored in a specific location (for example, a memory) or can be managed using a management table. The information, signal, and the like to be input and/or output can be overwritten, updated or appended. The output information, signal, and the like may be deleted. The input information, signal, and the like may be transmitted to another apparatus.

Notification of information may be performed using not only the aspects/embodiments described in the present disclosure but also another method. For example, the notification of information in the present disclosure may be performed using physical layer signaling (e.g., downlink control information (DCI), uplink control information (UCI), higher layer signaling (e.g., radio resource control (RRC) signaling, broadcast information (master information block (MIB), system information block (SIB), or the like), medium access control (MAC) signaling, another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of MAC signaling may be performed using, for example, a MAC control element (MAC CE).

Further, notification of given information (e.g., notification of "being X") is not limited to explicit notification but may be performed implicitly (for example, by not performing notification of the given information or by performing notification of another piece of information).

A determination may be made in a value represented by one bit (0 or 1), may be made in a Boolean value that represents true or false, or may be made by comparing numerical values (e.g., comparison against a given value).

Software, whether referred to as "software", "firmware", "middleware", "microcode", or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions, and the like.

Further, the software, instruction, information, and the like may be transmitted/received via a transmission medium. For example, when software is transmitted from a website, a server, or other remote sources using at least one of wired technology (a coaxial cable, an optical fiber cable, a twisted-pair cable, a digital subscriber line (DSL), and the like) and wireless technology (infrared light, microwaves, and the like), at least one of these wired technology and wireless technology is included in the definition of the transmission medium.

The terms "system" and "network" used in the present disclosure may be used compatibly. The "network" may mean an apparatus (e.g., a base station) included in the network.

In the present disclosure, terms such as "precoding", "precoder", "weight (precoding weight)", "quasi-Co-Location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be compatibly used.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", "component carrier", and the like may be compatibly used. The base station is also sometimes referred to by a term such as a macro cell, a small cell, a femto cell, and a pico cell.

A base station may accommodate one or a plurality of (for example, three) cells. When a base station accommodates a plurality of cells, the entire coverage area of the base station can be partitioned into a plurality of smaller areas, and each smaller area can provide communication service through base station subsystems (e.g., indoor small base stations (remote radio heads (RRHs))). The term "cell" or "sector" refers to a part or the whole of a coverage area of at least one of a base station and a base station subsystem that perform a communication service in this coverage.

In the present disclosure, the terms such as "mobile station (MS)", "user terminal", "user equipment (UE)", and "terminal" can be compatibly used.

A mobile station is also sometimes referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by some other appropriate terms.

At least one of the base station and the mobile station may be referred to as a transmission apparatus, a reception apparatus, a radio communication apparatus, and the like. Note that at least one of the base station and the mobile station may be a device mounted on a moving body, a moving body itself, and the like. The moving body may be a transportation (e.g., a car, an airplane, and the like), an unmanned moving body (e.g., a drone, an autonomous car, and the like), or a (manned or unmanned) robot. Note that at least one of the base station and the mobile station also includes a device that does not necessarily move during a communication operation. For example, at least one of the base station and the mobile station may be an Internet of Things (IoT) device such as a sensor.

Further, the base station in the present disclosure may be replaced with the user terminal. For example, each aspect/embodiment of the present disclosure may be applied to a structure in which communication between the base station and the user terminal is replaced with communication among a plurality of user terminals (which may be referred to as, for example, device-to-device (D2D), vehicle-to-everything (V2X), and the like). In the case, the user terminal 20 may have the function of the above-mentioned base station 10. In addition, terms such as "uplink" and "downlink" may be replaced with terms corresponding to communication between terminals (for example, "side"). For example, an uplink channel, a downlink channel, and the like may be replaced with a side channel.

Similarly, the user terminal in the present disclosure may be replaced with the base station. In the case, the base stations 10 may have the function of the above-mentioned user terminal 20.

In the present disclosure, the operation performed by the base station may be performed by an upper node thereof in some cases. In a network including one or a plurality of network nodes with a base station, it is clear that various operations performed so as to communicate with a terminal can be performed by a base station, one or a plurality of network nodes (e.g., mobility management entity (MME) and serving-gateway (S-GW) may be possible, but are not limiting) other than the base station, or a combination thereof.

The aspects/embodiments illustrated in the present disclosure may be used independently or in combination, and may be switched depending on execution. Further, the order of processing procedures, sequences, flowcharts, and the like of the aspects/embodiments described in the present disclosure may be re-ordered as long as there is no inconsistency. For example, regarding the methods described in the present disclosure, elements of various steps are presented using an illustrative order, and are not limited to the presented particular order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (New-RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded based on these, and the like. Further, a plurality of systems may be combined (for example, a combination of LTE or LTE-A and 5G) and applied.

The phrase "based on" used in the present disclosure does not mean "based only on", unless otherwise specified. In other words, the phrase "based on" means both "based only on" and "based at least on".

Any reference to an element using designations such as "first" and "second" used in the present disclosure does not generally limit the amount or order of these elements. These designations may be used in the present disclosure only for convenience, as a method for distinguishing between two or more elements. Therefore, reference to the first and second elements does not mean that only two elements are adoptable, or that the first element must precede the second element in some way.

The term "determining" used in the present disclosure may include a wide variety of operations. For example, "determining" may be regarded as "determining" of judging, calculating, computing, processing, deriving, investigating, looking up, search, inquiry (for example, looking up in a table, database, or another data structure), ascertaining, and the like.

Further, "determining" may be regarded as "determining" of receiving (for example, receiving of information), transmitting (for example, transmitting of information), input, output, accessing (for example, accessing to data in a memory), and the like.

Further, "determining" may be regarded as "determining" of resolving, selecting, choosing, establishing, comparing, and the like. In other words, "determining" may be regarded as "determining" of a certain operation.

Further, "determining" may be replaced with "assuming", "expecting", "considering", and the like.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced by "access".

In the present disclosure, when two elements are connected, these elements may be considered to be "connected" or "coupled" to each other by using one or more electrical wires, cables, printed electrical connections, and the like, and by using, as some non-limiting and non-inclusive examples, electromagnetic energy having a wavelength in the radio frequency domain, microwave domain, and optical (both visible and invisible) domain, and the like.

In the present disclosure, the phrase "A and B are different" may mean "A and B are different from each other". Note that the phrase may mean that "A and B are different from C". The terms such as "separated", "coupled", and the like may be interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, when articles, such as "a", "an", and "the" are added in English translation, the present disclosure may include the plural forms of nouns that follow these articles.

Although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined on the basis of the description of claims. Therefore, the description in the present disclosure is provided for the purpose of describing examples, and thus, should by no means be construed to limit the invention according to the present disclosure in any way.

## Claims

1. A user terminal comprising:
a control section that determines a new candidate beam or a given DL reference signal based on at least one of a DL reference signal transmitted in a given cell and a DL reference signal transmitted in another cell configured in a same given frequency range as the given cell when a beam failure in the given cell is detected; and
a transmission section that transmits information related to the new candidate beam or the given DL reference signal.

2. The user terminal according to claim 1, wherein
a DL reference signal used to determine the new candidate beam or the given DL reference signal is configured for each cell.

3. The user terminal according to claim 1, wherein
a DL reference signal used to determine the new candidate beam or the given DL reference signal is configured across a plurality of cells included in a given frequency range.

4. The user terminal according to any one of claims 1 to 3, wherein
the control section performs control so as not to transmit the information related to the new candidate beam or the given DL reference signal when no DL reference signal is configured in the given cell and the other cell.

5. The user terminal according to any one of claims 1 to 4, wherein
when a DL reference signal for a new candidate beam is not configured for the given cell, the control section determines the new candidate beam or the given DL reference signal in the given cell using a given DL reference signal that is in quasi-co-location with a DL reference signal configured in the other cell.

6. A radio communication method comprising:
a step of determining a new candidate beam or a given DL reference signal based on at least one of a DL reference signal transmitted in a given cell and a DL reference signal transmitted in another cell configured in a same given frequency range as the given cell when a beam failure in the given cell is detected; and
a step of transmitting information related to the new candidate beam or the given DL reference signal.
